# EUROPÄISCHE PATENTANMELDUNG

(11) **EP 1 867 694 A1**
(43) Veröffentlichungstag der Anmeldung: **19.12.2007**
(21) Anmeldenummer: 06090105.5
(22) Anmeldetag: 15.06.2006
(51) Int. Cl.: C09K 5/10, C01D 1/04

(54) **Gebinde mit Umlauf-Flüssigkeit**

(71) Anmelder: BaCoGa Technik GmbH, 36323 Grebenau (DE)
(72) Erfinder: Klieboldt, Wilhelm, 36043 Fulda (DE)
(74) Vertreter: Meys, Hildegard

(57) **Zusammenfassung**

Es werden Gebinde, gefüllt mit Umlauf-Flüssigkeit bestimmter Zusammensetzung als Wärmeträger für Wärme- und Kältetransport in Rohrleitungssystemen beschrieben, welche es ermöglichen, Beschädigungen des Rohrleitungsmaterials durch Ablagerungen und Störungen des Flüssigkeits-Kreislaufes durch Verstopfungen vorzubeugen. Beim Einsatz erfindungsgemässer Gebinde ist keine spezielle Aufbereitung des Wärmeträgers mehr erforderlich und jedwede arbeitsaufwendige Analyse und Berechnung von Zusätzen entfällt. Erfindungsgemässe Gebinde können in beliebigen Grössen bereitgestellt werden, und ihr Inhalt kann sowohl für Erst- und Neubefüllungen als auch zum Nachfüllen eingesetzt werden.

## Beschreibung

Die Erfindung betrifft Gebinde mit einer Umlauf-Flüssigkeit als Wärmeträger für den Wärme- und Kältetransport in Leitungssystemen.

Es gibt vielerlei technische Verfahren und Anlagen, bei denen eine indirekte Erwärmung oder Abkühlung mittels Wärmeträgern, wie zum Beispiel Arbeitsmittel von Solaranlagen oder Wärmepumpen, Dampf oder Heizwasser, erfolgt. Diese Hilfsflüssigkeiten werden verfahrenstechnisch vorteilhaft in einem Leitungssystem im Kreislauf geführt. Im Trend der notwendigen Energieeinsparung wird in der Regel heutzutage eine kompaktere Bauweise der Gerätschaften konzipiert. Die Rohrquerschnitte in den Leitungssystemen sind dann entsprechend kleiner dimensioniert. Damit erhöht sich das Risiko von Anlagestörungen, im Extremfall der Ausfall der Anlage, denn bekanntlich enthält das übliche von den örtlichen Wasserwerken gelieferte Leitungswasser, das in der Regel als Wärmeträger eingesetzt wird, Bestandteile, die mit der zeit Ablagerungen zu bilden vermögen,was verfahrenstechnische Nachteile bringen und schlimmstenfalls zu Rohrverstopfungen führen kann.
Zur Vermeidung beziehungsweise Beseitigung derartiger Schäden an solchen Anlagen ist eine spezielle Aufbereitung des jeweils als Wärmeträger eingesetzten Leitungswassers erforderlich. Eine solhe spezielle Aufbereitung ist sowohl bei einer Erstbefüllung bei Inbetriebnahme einer Anlage als auch bei Nachbefüllung nach Reinigung einer Anlage und beim Nachfüllen mit frischem Wasser während des Betriebs erforderlich. Da über die örtlichen Wasserwerk-Netze geliefertes Leitungswasser ebenso wie aus sonstigen Quellen etwa entnommenes Heizwasser in den verschiedenen Orten und sogar verschiedenen Ortsteilen vielfältig unterschiedliche Analysenwerte aufweist, z.B. unterschiedliche Konzentrationen an Erdalkalien, wie Calcium- und Magnesium-Ionen (Wasserhärte), unterschiedlichen Gehalt an organischem Kohlenstoff (TOC). unterschiedliche Nitrat- und Chlorid-Gehalte u.a.m, ist in jedem Einzelfall eine relativ komplizierte und sehr arbeitsaufwendige Analyse, Berrechnung und Dosierung der benötigten Zusatz- und Ergänzungs-Chemikalien erforderlich, um für die einzelnen Anlagen die optimale Struktur des Wärmeträgers zu erreichen und zu sichern, was die Arbeit des Heizungsinstallateurs sehr erschwert und sozusagen mathematische Fähigkeiten und Kenntnisse erfordert.

Der Erfindung liegt die Aufgabe zugrunde, diese Nachteile zu beheben und die Erstbefüllung, Neubefüllung und Nachbefüllung einer Kreislauf-Anlage mit Umlauf-Flüssigkeit als Wärmeträger zu vereinfachen und zu erleichtern.

Gegenstand der Erfindung ist dazu ein Gebinde mit einer Umlauf-Flüssigkeit als Wärmeträger für Wärme und Kältetransport in Leitungssystemen gemäss Patentanspruch 1.

Weiterbildungen und vorteilhafte Ausgestaltungen ergeben sich aus den Unteransprüchen.

Die erfindungsgemässen Gebinde können in an sich beliebigen unterschiedlichen Grössen, z.B. als 1000-Literoder 500-Liter-Container für Neubefüllungen und 10-Literoder 20-Liter-Kanister für Nachbefüllungen und auch in Tanks zur portionsweisen Entnahme zur Verfügung gestellt werden. Zweckmässig werden genormte Gebinde-Grössen verwendet, was den Transport erleichtert udn die Kosten minimiert. Die Gebinde-Behältnisse können nach dem Verbrauch des Gebinde-Inhaltes als Leergut der Wiederverwendung, erneuten Füllung mit Umlauf-Flüssigkeit und erneutem Vertrieb, zugeführt werden.

Die Umlauf-Flüssigkeit für die erfindungsgemässen Gebinde wird zentral hergestellt und für beliebige derartige Anlagen aller Art, die an beliebig verschiedenen Orten und Gegendan betrieben werden, gleichartig gemäss einer bestimmten Analysen-Vorschrift konzipiert. Es ist bei dem Einsatz der erfindungsgemässen Gebinde an dem jeweiligen Einsatzort keinerlei Nachberechnung der Analysenwerte, keine Anpassung an örtliche Leitungswasser-Besonderheitn und/oder Geräte-Schutzmethoden erforderlich. Es hat beispielsweise bei der Neubeüllung von Warmwasser-Heizungsanlagen nach erfolgter Reinigung der Heizungs-Installateur nunmehr die Möglichkeit, ohne eigene komplizierte Berechnungen und ohne Berücksichtigung der örtlichen Leitungswasser-Zusammensetzungs-Besonderheiten und ohne Kenntnisder örtlichen Wasser-Beschaffenheit die Anlage mittels in den erfindungsgemässen Gebinden enthaltener Umlauf-Flüssigkeit einfach zu beüllen und in Betrieb zu setzen. Ebenso ist nun das gegebenenfalls erforderliche Nachbefüllen mit Umlauf-Flüssigkeit in den Kreislaufsystemen mittels auf Vorrat gehaltenen erfindungsgemässen Gebinden ohne jede Schwierigkeit, vorteilhaft mit Hilfe eintsprechender Einfüllpumpe, möglich. Bei Bedarf, beispielsweise in dicht besiedelten Gebieten, wie grossen Städten, kann es vorteilahft sein, eine Zentralstation mit z.B. einem mit Umlauf-Flüssigkeit gefülltem Tank als erfindungsgemässes Gebinde, vorzusehen, aus dem für den Einzelverbrauch in kleinere Gebinde umgefüllt werden kann.

Für die Zubereitung der in den erfindungsgemässen Gebinden vorhandenen Umlauf-Flüssigkeit wird vollständig gereinigtes Wasser, z.B. destilliertes Wasser oder auf sonstige Weise demineralisiertes bzw. voll entsalztes Wasser (VE-Wasser), so dass dessen Gesamthärte (bei 20°C) unter 10 dH liegt, alkalisiert, z.B. mit Alkali-Lauge, und auf den erforderlichen pH-Wert von 7,5, zweckmässig pH 8,5-8,6, maximal pH 8, 8, gebracht. Die Ionen-Konzentration wird so eingestellt, dass der elektrische Leitfähigkeitswert in der Umlauf-Flüssigkeit 300 µS/cm nicht übersteigt. Gewünschtenfalls kann dem so eingestellten Wasser Glykol zugesetzt werden, was insbesondere für die Vorratshaltung vorteilhaft ist, denn Glykol wirkt stabilisieren bei Temperatur-Absenkungen. Das macht gegebenenfalls den weiteren Zusatz von Frostschutzmittels überflüssig. In jedem Fall muss die Umlauf-Flüssigkeit in den erfindungsgemässen Gebinden abermindestens zu 80 Vol-% aus gereinigtem Wasser bestehen.

Insbesondere für die Verwendung in Warmwasser-Heizungsanlagen enthält die in den erfindungsgemässen Gebinden vorhandene Umlauf-Flüssigkeit zweckmässig noch an sich für diese Zwecke bekannte und handelsübliche Korrosionsinhibitoren, die der Korrosionsverhinderung auf den Stahlrohr-Innenoberflächen dienen und als Härtestabilisatoren wirken. Weiterhin können zusätzlich für diese Zwecke bekannte Frostschutzmittel sowie Bakterizide und Fungizide in den üblichen Zusatzmengen beigegeben sein. Die Dosierung ist dabei so eingestellt, dass diese Zusätze mit dem pH-Wert und den Leitfähigkeitswerten der in den erfindugnsgemässen Gebinden ehthaltenen Umlauf-Flüssigkeit korrespondieren. Bei solchen handelsüblichen Zusätzen handelt es sich um firmenintern konzipierte, fabrikationsgeheime Produkte. Beispielsweise sind von der Anmelderin unter deren Handelsbezeichnungen "BCG K" und "BCG K 32" vertriebene Korrosionsinhibitoren molybdänhaltige Produkte mit Cu-Inhibitor; ein von der Anmelderin unter deren Handelsbezeichnung "BCG FS" vertriebenes Frostschutzmittel für diese Zwecke basiert auf Monopropylenglykol.

Wenn insbesondere ältere Leitungssysteme mit der Umlauf-Flüssigkeit als Wärmeträger befüllt werden, bedient man sich zweckmässig solcher erfindungsgemässer Gebinde, deren darin enthaltene Umlauf-Flüssigkeit zusätzlich ein handelsübliches Mittel gegen Undichtigkeiten und Leckstellen enthält. Ein solches Mittel wird beispielsweise von der Anmelderin unter der Handelsbezeichnung "BCG 30" vertrieben und basiert auf Cellulose-Pulver.

Für die Verwendung der erfindungsgemässen Gebinde und den Einsatz der darin enthaltenen Umlauf-Flüssigkeit ist es absolut notwendig, dass die Leitungssysteme, in welche der Gebinde-Inhalt eingefüllt werden soll, zuvor sorgfältig und vollständig gereinigt und nach dem Reinigen passiviert (neutralisiert) und sorgfältig ausgespült werden. Erst danach darf die Anlage mit der in den erfindungsgemässen Gebinden enthaltenen Umlauf-Flüssigkeit befüllt werden. Das Nachfüllen aus den erfindungsgemässen Gebinden soll nur dann vorgenommen werden, wenn zuvor eine Erst- oder Neubefüllung mit in erfindungsgemässen Gebinden enthaltener Umlauf-Flüssigkeit stattgefunden hat.

Sowohl für die Erst- bzw. Neubefüllung als auch für die Nachbefüllung können Gebinde (Kanister) mit integrierter Einfüllpumpe eingesezt werden.

Die erfindungsgemässen Gebinde sollten zweckmässig vollständig mit Umlauf-Flüssigkeit gefüllt und gut verschlossen aufbewahrt werden, um das Eindringen von Luftverschmutzungen zu vermeiden. In Grossgebinden, wie beispielsweise Tanks, aus denen zeitlich verzögert portionsweise in kleinere Gebinde abgefüllt werden soll, und die über einen längeren Zeitraum nur teilweise mit Umlauf-Flüssigkeit gefüllt stehen, wird der Gasraum über der Flüssigkeit vorteilhaft mit Stickstoff anstelle von Luft ausgefüllt.

## Patentansprüche

1. Gebinde mit einer Umlauf-Flüssigkeit für Wärmeund Kältetransport in Leitungssystemen, die eine Gesamthärte unter 10° dH, einen pH-Wert von 7,5 bis 8,8, vorzugsweise pH 8,5 - 8,6, und eine elektrische Leitfähigkeit von maximal 300 uS/cm aufweist und zu mindestens 80 Vol-% aus Wasser besteht.

2. Gebinde nach Anspruch 1, **dadurch gekennzeichnet, dass** die Umlauf-Flüssigkeit einen Anteil an Glykol enthält.

3. Gebinde nach Anspruch 1 oder 2, **dadurch gekennzeichnet, dass** in der Umlauf-Flüssigkeit handelsübliche Korrosionsinhibitoren und Härtestabilisatoren enthalten sind.

4. Gebinde nach einem der vorhergehenden Ansprüche, **dadurch gekennzeichnet, dass** in der Umlauf-Flüssigkeit handelsübliche Frostschutzmittel enthalten sind.

5. Gebinde nach einem der vorhergehenden Ansprüche, **dadurch gekennzeichnet, dass** in der Umlauf-Flüssigkeit ein handelsübliches Bakterizid und/oder Fungizid enthalten ist.

6. Gebinde nach einem der vorhergehenden Ansprüche, **dadurch gekennzeichnet, dass** in der Umlauf-Flüssigkeit ein handelsübliches Mittel gegen Undichtigkeiten und Leckstellen im Leitungssystem enthalten ist.

7. Gebinde nach einem der vorhergehenden Ansprüche, **dadurch gekennzeichnet, dass** eine integrierte Einfüllpumpe vorhanden ist.
